# FASCICULE DE BREVET EUROPEEN

(11) **EP 2 900 602 B1**
(45) Date de publication et mention de la délivrance du brevet: **03.08.2016**
(21) Numéro de dépôt: 13785500.3
(22) Date de dépôt: 27.09.2013
(51) Int. Cl.: C01G 23/04, C04B 35/46, C04B 35/626, C04B 35/653

(54) **GRAINS FONDUS DE SOUS OXYDES DE TITANE ET PRODUITS CERAMIQUES COMPORTANT DE TELS GRAINS**
GESCHMOLZENE KÖRNER AUS TITANSUBOXIDEN SOWIE KERAMIKPRODUKTE MIT DERARTIGEN KÖRNERN
MOLTEN GRAINS OF TITANIUM SUB-OXIDES AND CERAMIC PRODUCTS COMPRISING SUCH GRAINS

(30) Priorité: 28.09.2012 FR 1259183
(43) Date de publication de la demande: 05.08.2015
(73) Titulaire: Saint-Gobain Centre De Recherches Et D'etudes Europeen, 92400 Courbevoie (FR)
(72) Inventeur: RAFFY, Stéphane, F-84300 Cavaillon (FR)
(74) Mandataire: Lucas, Francois
(86) Numéro de dépôt international: PCT/FR2013/052293
(87) Numéro de publication internationale: WO 2014/049288

(56) Documents cités:
- WO-A1-2009/024776
- GB-A- 232 680
- US-A- 4 422 917

## Description

L'invention se rapporte à des grains pour applications céramiques constitués majoritairement de sous oxydes de titane. Par sous oxydes de titane on entend classiquement des oxydes de titane de formulation générale TiOₓ dans lesquels x est compris entre 1 et 2, bornes exclues, en particulier les phases dites de Magnéli. L'invention se rapporte en particulier à un procédé de fabrication de tels grains, ainsi qu'à des matériaux et/ou produits céramiques constitués à partir desdits grains ou comprenant ceux-ci, en particulier mais pas uniquement, à des électrodes ou autres dispositifs électrochimiques, notamment utiles pour la réalisation de batteries.

Dans la suite de la description, on décrit plus particulièrement l'application des grains selon l'invention et leurs avantages dans le domaine spécifique des électrodes. Il est cependant bien entendu que de tels grains, par les avantages qu'ils procurent, sont susceptibles d'être utilisés avantageusement dans de nombreuses autres applications dans le domaine des céramiques, notamment dans tout domaine pour lequel une bonne conductivité électrique et/ou une bonne résistance à la corrosion sont recherchées. On peut citer en particulier, mais sans s'y restreindre, les domaines suivants : catalyse, pigments, photocatalyse, composants électriques ou électroniques.

Le brevet EP 047 595 B1 (ou son équivalent US 4,422,917) propose des matériaux constitués de sous-oxyde de type TiOₓ avec x compris entre 1,55 et 1,95, pour la réalisation d'électrodes. Les matériaux sont synthétisés à partir de poudre de TiO₂ en mélange avec un composé réducteur du type Ti, TiN, TiSi, C, TiO ou Ti₂O₃, à des températures comprises entre 1150 et 1450°C suivant la nature du composé réducteur.

Le brevet EP 572 559 B1 décrit, pour cette même application, l'utilisation des sous-oxydes de titane entièrement constitués de phases de Magnéli répondant à la compositionTiₙO₂ₙ₋₁, avec n supérieur à 4. Le brevet décrit un procédé d'obtention de tels matériaux incluant une première étape sensiblement identique à celle décrite dans EP 047 595 B1, suivie d'une étape supplémentaire de recuit à une température comprise entre 1100 et 1300°C, en présence d'hydrogène, pour éliminer tous les oxydes inférieurs de titane.

La demande de brevet internationale WO2009/024776 décrit des matériaux similaires, constitués essentiellement d'un mélange des phases cristallines dites de Magnéli Ti₄O₇, Ti₅O₉ et Ti₆O₁₁. Il est indiqué qu'une telle constitution permet un meilleur compromis entre la conductivité électrique des particules de sous oxydes de titane et leur résistance à la corrosion, la phase Ti₄O₇ étant décrite comme la plus avantageuse pour obtenir les plus fortes conductivités. La méthode d'obtention de telles particules est décrite comme identique à celle décrite dans le brevet US 4,422,917 et consiste en une réduction par l'hydrogène d'une poudre de TiO₂, pendant 8 heures et à une température de 1180°C.

La demande de brevet EP 478 152 A1 souligne cependant les inconvénients liés aux méthodes de préparation des grains de sous oxyde (s) de titane TiOₓ décrites dans les publications précédentes. Pour les résoudre et notamment atteindre des valeurs de x proches de 1,80, le document indique que la réduction du TiO₂ doit être effectuée sur un support constitué d'une couche poreuse de graphite. La quantité de poudre de sous-oxyde de titane pouvant être obtenue par un tel procédé apparaît cependant nécessairement limitée par la faible épaisseur de la couche présente au-dessus du support. En outre, un tel procédé nécessite une poudre initiale de TiO₂ très fine (ou de forte surface spécifique), ce qui limite son intérêt économique.

L'analyse précédente montre qu'il existe encore à l'heure actuelle le besoin d'une méthode de préparation simple, économique et fiable de tels grains de sous-oxydes de titane répondant à une formulation générale TiOₓ, en particulier dans laquelle x est compris entre 1,50 et 1,95 tout particulièrement dans laquelle x est compris entre 1,75 et 1,85, et de manière très préférée entre 1,76 et 1,83.

Egalement, il existe un besoin permanent de proposer des grains et poudres de sous-oxyde(s) de titane présentant le meilleur compromis entre la conductivité électrique et la résistance à la corrosion.

L'objet de la présente invention vise à résoudre efficacement de tels problèmes.

Selon un premier aspect, la présente invention se rapporte ainsi à un procédé de fabrication de grains constitués essentiellement de sous-oxyde(s) de titane, ledit procédé comprenant les étapes suivantes :
a) la fusion, dans des conditions réductrices, d'un mélange initial (ou charge initiale) comprenant des particules de dioxyde de titane, à une température supérieure à 1500°C, de préférence à une température supérieure à 1600°C, voire supérieure à 1700°C,
b) le refroidissement du mélange fondu jusqu'à sa solidification,
c) le broyage de la masse solidifiée pour l'obtention de grains fondus du ou des sous-oxydes de titane.

Selon des modes préférés de réalisation du procédé :

Le mélange initial comprend du dioxyde de titane et du coke, utilisé comme agent réducteur.

Le mélange initial comprend entre 1 et 25% poids de coke, rapporté au poids total du mélange, de préférence entre 10 et 18% poids de coke.

Du coke est utilisé dans le mélange initial et la fusion est réalisée sous air.

Le dioxyde de titane représente plus de 90% de la masse minérale totale présente dans le mélange initial et de préférence représente la totalité de la masse minérale présente dans le mélange initial.

Sans sortir du cadre de l'invention, le mélange initial peut cependant également comprendre de la matière minérale autre que le dioxyde de titane, par exemple dans une quantité inférieure à 10%, voire inférieure à 4%, ou même inférieure à 3%, voire inférieure à 1%, voire inférieure à 0,5% de la masse minérale totale. Cette matière minérale peut par exemple être de la silice (SiO₂), des oxydes pentavalents tels que Nb₂O₅ ou Ta₂O₅, ZrO₂, des oxydes de Ba Sr ou bien des impuretés (liées notamment aux matières premières utilisées) comme Al₂O₃, Cr₂O₃, Fe₂O₃, les oxydes d'alcalins ou d'alcalino-terreux du type Ca, Na, K, Li.

Lors de l'étape a), on utilise de préférence un four à arcs électriques, mais tous les fours connus sont envisageables, comme un four à induction ou un four à plasma, pourvu qu'ils permettent de faire fondre complètement le mélange ou la charge initiale.

De préférence, à l'étape b), le refroidissement s'opère de manière à ce que le liquide fondu soit solidifié lentement, en particulier de manière à ce que le liquide fondu soit entièrement solidifié en plus de 5 minutes, par exemple en coulant le liquide en fusion sous forme de lingots.

A l'étape c), la masse solidifiée est broyée, selon des techniques conventionnelles, jusqu'à obtenir la taille des grains propre à l'application envisagée. Par exemple, le broyage peut être poursuivi jusqu'à l'obtention de grains de taille millimétrique, par exemple de l'ordre de 0,1 à 5 millimètres, voire micrométrique, par exemple de l'ordre de 0,1 à 50 microns.

Par l'application d'un tel procédé, il est apparu possible de synthétiser directement et sans difficultés excessives des grains fondus (c'est-à-dire issu d'un processus de fusion recristallisation) constitués essentiellement de sous-oxydes de titane et répondant à la formulation moyenne générale TiOₓ, la valeur de x pouvant être très facilement adaptée en fonction de la composition du mélange initial jusqu'à des valeurs proches de 1,5, en particulier à des valeurs comprises entre 1,75 et 1,85 et notamment entre 1,76 et 1,83. Avantageusement, une telle modulation peut être obtenue directement selon l'invention en fonction du taux de pourcentage de coke initialement présent dans le mélange.

Mieux, les expériences menées par la société déposante ont montré que le processus de fusion-recristallisation pouvait être mené sous air dans un dispositif adapté (tel qu'un four à arcs électrique) sans la mise en place d'une atmosphère réductrice dans le dispositif de chauffage, comme enseigné dans l'art antérieur. Il semble en effet que la réaction de réduction du TiO₂ par le carbone réducteur dégage une faible quantité de CO, cette faible quantité de CO étant cependant suffisante, contre toute attente, pour assurer une atmosphère réductrice au-dessus de la matière fondue et le processus de réduction de l'oxyde de titane. Les grains de l'invention peuvent en particulier et avantageusement être élaborés par les procédés d'électrofusion, permettant la fabrication de grandes quantités de grains avec des rendements intéressants et un très bon rapport prix/performance.

En outre, les grains fondus issus de la mise en oeuvre d'un tel procédé ont montré une composition différente des grains obtenus par les techniques différentes, notamment en ce qui concerne les proportions relatives des phases de Magneli en présence, telles que notamment décrites dans les publications WO2009/024776 ou EP 572 559 B1.

Tout particulièrement et de façon tout à fait inattendue, les expériences menées par la société déposante ont démontré que ces compositions jamais encore décrites dans le domaine conduisaient à des propriétés de conduction électrique et de résistance à la corrosion globalement supérieures à celles des sous-oxydes de titane décrits précédemment. En particulier, si les propriétés de conduction électrique sont apparues sensiblement équivalentes, les matériaux obtenus à partir des grains selon l'invention ont montrés des résistances à la corrosion sensiblement améliorées. Selon les recherches menées par la société déposante, les conductivités électriques de telles compositions peuvent encore être augmentées en contrôlant le taux des autres oxydes présents dans les grains fondus obtenus par le procédé selon l'invention.

Ces expériences sont reportées dans la suite de la présente description, dans la partie expérimentale.

De telles propriétés rendent l'utilisation de tels matériaux très avantageuse dans de nombreux domaines d'application céramiques et en particulier pour la fabrication d'électrodes ou autres dispositifs électrochimiques, notamment utiles pour la réalisation de batteries.

La présente invention se rapporte ainsi également aux grains fondus, sous forme notamment de poudre, susceptibles d'être obtenus par un procédé tel que décrit précédemment.

Les grains fondus selon l'invention sont constitués essentiellement de sous-oxydes de titane répondant à la formulation TiₙO₂ₙ₋₁, dans lesquels lesdites phases sont principalement Ti₅O₉ ou Ti₆O₁₁ ou un mélange de ces deux phases, lesdites phases Ti₅O₉ et/ou Ti₆O₁₁ représentant, au total, plus de 60% du poids des grains, lesdits grains comprenant en outre moins de 30% en poids de Ti₄O₇.

Les grains fondus selon l'invention comprennent de préférence plus de 80% en poids, voire plus de 85% en poids ou même plus de 90% en poids, au total, de sous-oxyde (s) de titane répondant à la formulation générique TiₙO₂ₙ₋₁, n étant un nombre entier supérieur à 3.

De préférence, la phase Ti₃O₅ représente moins de 20% du poids total des grains et de préférence moins de 15%, voire moins de 10%, voire moins de 5% du poids total des grains.

De préférence les grains fondus comprennent au total plus de 92%, voire plus de 94%, ou encore plus de 95% de sous-oxyde(s) de titane.

Sans sortir du cadre de la présente invention, les grains peuvent cependant comprendre d'autres phases, en particulier la silice (SiO₂), ou bien d'autres éléments, présents essentiellement sous forme oxyde ou en solution solide avec le ou les sous-oxyde(s) de titane, notamment Al, Cr, Zr, Nb, Ta, Li, Fe, les alcalins ou les alcalino-terreux du type Ca, Sr, Na, K, Ba. Sur la base des oxydes simples correspondants, la quantité sommée totale desdits éléments présents est de préférence inférieure à 10% poids de la masse totale des grains, par exemple inférieure à 5%, voire inférieure à 4%, ou même inférieure à 3% poids de la masse totale des grains. La présence de ces éléments peut notamment être désirée, en particulier Nb et Ta, et tout particulièrement Nb, ou être simplement liée aux impuretés présentes dans les matières premières utilisées.

Selon un mode avantageux, le taux de silicium (exprimé sous formeSiO₂) dans les grains selon l'invention est inférieur à 1,5% poids, voire inférieur à 1% poids.

Selon un mode avantageux de l'invention, le taux cumulé de silicium (exprimé sous forme SiO₂) et de zirconium (exprimé sous forme ZrO₂) dans les grains selon l'invention est inférieur à 2,5% poids et de préférence est inférieur à 2% poids, voire inférieur à 1,5% poids.

Les grains peuvent en outre comprendre des traces de nitrures (nitrures, oxynitrures ou carbonitrures de titane).

Selon un mode préféré, les grains fondus selon l'invention sont constitués uniquement desdits sous-oxydes de titane, les autres phases n'étant présentes que sous la forme d'impuretés inévitables.

En particulier, lesdits sous-oxydes de titane sont de préférence principalement des phases TiₙO₂ₙ₋₁ dans lesquelles n est compris entre 4 et 9, bornes incluses, c'est-à-dire Ti₄O₇, Ti₅O₉, Ti₆O₁₁, Ti₇O₁₃, Ti₈O₁₅ ou Ti₉O₁₇, lesdites phases représentant, au total, plus de 80%, voire 85% ou même 90% du poids des grains.

Par « principalement », on entend que les pics de diffraction principaux observés sur un diffractogramme de rayons X correspondent à ces phases de Magnéli.

En particulier, au sens de la présente invention, une phase est considérée comme « principale » si elle représente plus de 25% du poids des grains et de préférence au moins 35% du poids des grains.
Selon un mode particulièrement préféré, lesdites phases principales sont des phases TiₙO₂ₙ₋₁ de formulation générique Ti₅O₉ ou Ti₆O₁₁ ou un mélange de ces deux phases.
En particulier, dans les grains fondus selon un mode avantageux de la présente invention, les phases Ti₅O₉ et/ou Ti₆O₁₁ représentent, au total, plus de 60% du poids des grains, de préférence plus 70% du poids des grains, et de manière très préférée plus de 80% du poids des grains.

De façon étonnante, bien que leur résistivité électrique reste comparativement basse, on a pu constater que les grains fondus selon l'invention comprenaient le plus souvent, voire systématiquement, une quantité relativement faible de la phase de Magneli avec n = 4 (Ti₄O₇), pourtant reportée dans la littérature comme assurant les plus faibles résistivités électriques. En particulier, les grains selon l'invention peuvent comprendre moins de 30% poids de Ti₄O₇. En particulier, les grains selon l'invention comprennent généralement moins de 25% poids de Ti₄O₇, et le plus souvent moins de 20% poids de Ti₄O₇ ou même dans certaines compositions moins de 15% poids de Ti₄O₇.

Les grains selon l'invention peuvent par exemple comprendre, sous forme de phase minoritaire ou plus souvent de traces, d'une phase autre que celles dites de Magnéli, en particulier du Ti₃O₅ ou du Ti₂O₃ ou encore du TiO₂.

De façon étonnante, les résistivités électriques mesurées pour les matériaux obtenus à partir des grains selon l'invention sont comparables à celles données dans la littérature pour les produits obtenus selon les procédés antérieurs. En, particulier, les grains fondus selon l'invention, comprenant moins de 30% poids, au total, d'autres phases de sous-oxydes de titane TiₙO₂ₙ₋₁ que le Ti₅O₉ et/ou Ti₆O₁₁, ont montrés des propriétés particulièrement intéressantes, comme il sera reporté dans la suite de la description.

Les grains fondus tels que précédemment décrits répondant essentiellement à une formulation globale moyenne TiOₓ, dans laquelle x est compris entre 1,95 et 1,50, et de préférence dans laquelle x est compris entre 1,75 et 1,85. Par « essentiellement » on entend que d'autres éléments ou oxydes tels que décrits précédemment peuvent entrer en une quantité minime dans la composition des grains, sans pourtant être pris en compte dans la formulation précédente.

Au sens de la présente invention, les pourcentages poids des différentes phases constituant les grains peuvent être déterminés selon les techniques bien connues dans le domaine, en particulier par diffraction des rayons X éventuellement combinée avec une analyse par fluorescence X comme il sera décrit dans la suite de la description.

Afin de ne pas alourdir inutilement la présente description, toutes les combinaisons possibles selon l'invention entre les différents modes préférés des compositions des grains selon l'invention, tels qu'ils viennent d'être décrits précédemment, ne sont pas reportées. Il est cependant bien entendu que toutes les combinaisons possibles des domaines et valeurs initiaux et/ou préférés précédemment décrits sont envisagées à l'heure du dépôt de la présente demande et doivent être considérées comme décrites par le demandeur dans le cadre de la présente description (notamment de deux, trois combinaisons ou plus).

L'invention a également pour objet un produit ou un matériau céramique, obtenu par frittage des grains précédemment décrits. Le frittage peut notamment être opéré à une température comprise entre 1200°C et 1800°C.

Selon un autre aspect, l'invention a pour objet un produit revêtu d'un revêtement obtenu par projection d'une poudre constituée des grains précédemment décrits.

D'une manière générale, tous les modes de réalisation décrits précédemment en relation avec les compositions des grains fondus sont directement transposables aux produits (ou matériau) ou aux revêtements céramiques décrits précédemment. Tout particulièrement, sont directement transposables à la composition du produit (ou du matériau) selon l'invention toutes les valeurs et tous les domaines préférés décrits précédemment, en relation avec la composition des grains correspondants, notamment tous les valeurs et domaines qui concernent, les différents phases et éléments susceptibles d'entrer dans leur composition.

Selon une application particulière de la présente invention, le produit selon la présente invention peut être une pièce céramique utilisée comme électrode.

Un procédé de fabrication d'un produit à partir d'un mélange initial de grains selon l'invention est par exemple le suivant :
Dans un premier temps, on mélange des grains fondus selon l'invention tels que précédemment décrits. Par exemple, les grains fondus ont été broyés de telle façon qu'ils présentent un diamètre médian adapté à l'application. Le procédé de fabrication comprend typiquement une étape de malaxage d'un mélange initial comprenant les grains et d'éventuels liant(s) organique(s) puis une étape de mise en forme par exemple par extrusion ou pressage, ou coulage en bande... Le procédé comprend ensuite une étape de cuisson et/ou de frittage, réalisée par exemple à une température supérieure à 1200° ou même supérieure à 1300°C mais ne dépassant pas 1800°C, de préférence ne dépassant pas 1750°C, de préférence sous une atmosphère neutre.

L'invention et ses avantages seront mieux compris à la lecture des exemples non limitatifs qui suivent. Dans les exemples, tous les pourcentages sont donnés en poids.

### Exemples :

Dans tous les exemples selon l'invention, les échantillons ont été préparés à partir d'un mélange de matières premières constituées d'une poudre de coke et d'une poudre d'oxyde de titane commerciale sous forme rutile comportant plus de 96% de TiO₂.

Les échantillons des exemples 1 à 6 selon l'invention sont obtenus par fusion du mélange des poudres précédentes, dans les différentes proportions reportées dans le tableau 1.

Plus précisément, les mélanges de réactifs initiaux sont préalablement fondus au four à arcs électriques, sous air. Le mélange fondu a ensuite été coulé en lingots permettant un refroidissement relativement lent.

Sur chaque échantillon, un prélèvement est effectué sur le mélange fondu après refroidissement pour en mesurer la résistivité électrique (notée Re et donnée conventionnellement en Ohm.cm) selon différents protocoles décrits ci-dessous dans la partie expérimentale.

Le reste du produit obtenu est broyé et tamisé pour retenir la poudre passant à 20 µm. La poudre finalement obtenue après tamisage présente un diamètre médian d₅₀ de 8,5 µm.

Un premier échantillon comparatif A, non conforme à l'invention est également synthétisé à partir d'un mélange de poudre de TiO₂ (rutile précédemment décrite) et de carbone black commercialisé par Cabot Corporation, dans une proportion égale à 4% du poids total du mélange de TiO₂ et de carbone black. Le mélange est pastillé puis fritté à 1450°C sous argon pendant 2 heures, sans aller jusqu'à sa fusion, conformément au procédé décrit dans les publications antérieures US 4,422,917 et WO2009/024776. Le produit ainsi fritté est ensuite broyé jusqu'à l'obtention d'une poudre de diamètre médian d₅₀ égal à 8, 8 µm (d₁₀ = 1,6µm ; d₅₀ = 8,8µm ; d₉₀ = 26,2µm).

Un second échantillon comparatif B, non conforme à l'invention, est également synthétisé à partir d'un mélange de poudre de TiO₂ (anatase) et de carbone black commercialisé par Cabot Corporation, dans une proportion égale à 1% du poids total du mélange de TiO₂ et de carbone black. Le mélange est fritté à 1450°C sous argon, sans aller jusqu'à sa fusion pendant 2 heures puis broyé comme précédemment.

La composition chimique et les phases cristallines présentes sont analysées à partir de la poudre de grains fondus pour certains des échantillons ainsi obtenus. Les résultats sont reportés dans le tableau 1 qui suit.

La résistance à la corrosion des grains fondus constituant les poudres est ensuite mesurée pour certains échantillons. Les résultats sont regroupés dans le tableau 2 suivant.

Les protocoles expérimentaux utilisés pour la caractérisation de la composition et des propriétés des différents échantillons obtenus sont les suivants :
1°) La composition chimique globale des grains sous la forme TiOₓ a été déterminée grâce à un essai consistant à mesurer la prise de masse d'un échantillon porté à 1000°C sous air qui va s'oxyder jusqu'à atteindre la stoechiométrie TiO₂. Le chauffage est poursuivi jusqu'à la stabilisation du poids de l'échantillon. La prise de masse finale, correspondant à la différence entre le composé stoechiométrique TiO₂ et la composition initiale, permet de calculer la valeur de x de la formule générale TiOₓ reportée dans le tableau 1.
   La teneur en impuretés est déterminée par fluorescence des rayons X. On détermine ainsi que tous les échantillons testés présentent un taux d'impuretés total compris entre 1% et au maximum 4% en poids.
2°) Les phases cristallines présentes dans les produits réfractaires ont été caractérisées par diffraction des rayons X. Les résultats obtenus sont regroupés dans le tableau 1 qui suit. Dans ce tableau, PP indique une phase principale, PM indique la présence d'une moins une autre phase minoritaire, « ~ » signifie que la ou les phase(s) est présente(s) sous forme de traces. On considère au sens de la présente invention qu'une phase est « principale » quand elle représente au moins 25% du poids total des grains. On considère qu'une phase est « minoritaire » lorsqu'elle représente plus de 5% et moins de 25% du poids des grains, en particulier plus de 5% et moins de 20% du poids des grains et de préférence plus de 5% et moins de 15% du poids des grains, étant entendu que la quantité sommée du poids des phases minoritaires est normalement inférieure à 50% et de préférence est inférieure à 30%, voire inférieure à 20%, du poids des grains. On considère qu'une phase est sous forme de « traces » quand elle représente moins de 1% du poids total des grains.
   Les proportions des différentes phases constituant les grains ont été mesurées quantitativement à partir des diffractogrammes des poudres par la méthode de Rietveld, en utilisant le logiciel EVA® et la base de données PDF-2 Release 2005 de l'ICDD. Plus particulièrement, l'analyse quantitative des phases est réalisée classiquement par affinement des diffractogrammes selon l'option « Full Pattern Matching », proposée par le logiciel EVA et développée dans la suite de programmes DIFFRACplus Evaluation Package Release (2005). Les proportions relatives en poids des phases majoritaires et minoritaires du type Ti₃O₅ (fiche 01-082-1138 de la base de données), Ti₄O₇ (fiche 01-077-1392), Ti₅O₉ (fiche 01-076-1690) et Ti₆O₁₁ (fiche 01-076-1266) sont mesurées pour les exemples 3 à 5. La somme totale des contributions de ces phases dans chaque échantillon est approximée à 100%, les autres phases étant normalement uniquement présentes sous forme de traces dans ces échantillons.
3°) Les résistivités électriques (Re) des échantillons selon l'invention et A et B comparatifs sont mesurées selon la méthode de Van Der Pauw selon différents protocoles :
   - Une résistivité Re-1 est mesurée sur des disques de diamètre 25 mm et d'épaisseur 2 mm par carottage d'un cylindre de 25 mm de diamètre du mélange fondu (c'est-à-dire après l'étape b) de fusion selon l'invention et sans broyage) dans lequel on découpe une pastille de 2 mm d'épaisseur du matériau brut obtenu par fusion.
   - Une résistivité Re-2 est mesurée pour l'échantillon selon l'exemple 4 sur des disques de diamètre 25 mm et d'épaisseur 2 mm d'un matériau obtenu par broyage du mélange fondu après refroidissement jusqu'à obtenir une poudre de diamètre médian d'environ 8,5 micromètres, puis frittage à 1200°C desdits grains dans une matrice de graphite, sous une pression de 21 MPa (3000 psi) et sous vide, pendant une heure.
   - Une résistivité Re-3 est mesurée pour l'échantillon selon l'exemple 4 sur des disques de diamètre 25 mm et d'épaisseur 2 mm d'un matériau obtenu selon le même principe que précédemment décrit pour la mesure de Re-2, mais à une température de frittage égale à 1400°C.

   Dans la mesure où on cherche à maximiser la conductivité électrique, les échantillons seront jugés d'autant meilleurs que leur résistivité électrique (Re) sera faible.
4°) La résistance à la corrosion des matériaux a été évaluée en immergeant 1g de poudre dans 15 ml de solution concentrée à 85% de H₃PO₄ ou HCl ou H₂SO₄ (comme indiqué dans le tableau 2) à une température de 60°C. Après un temps tel qu'indiqué dans le tableau 2, on prélève 1 ml de la solution et on dose par ICP la teneur en élément Ti dissout dans la solution. Les différentes teneurs mesurées, données en mg par ml sont reportées dans le tableau 2. Dans la mesure où on cherche selon l'invention les plus fortes résistances à la corrosion, les échantillons sont d'autant meilleurs que le dosage de l'élément Ti est faible.

**Tableau 1**

| Exemple | | 1 | 2 | 3 | 4 | 5 | 6 |
|---|---|---|---|---|---|---|---|
| Coke (% dans les matières premières) | | 1,0 | 10,1 | 13,8 | 15,3 | 10,4 | 16,7 |
| x dans TiOₓ | | 1,88 | 1,86 | 1,82 | 1,79 | 1,74 | 1,68 |
| | | Ti₉O₁₇ | | | | | |
| | PP | Ti₈O₁₅ | Ti₈O₁₅ | Ti₅O₉ (68) | Ti₅O₉ (56) | Ti₃O₅ (40) | Ti₃O₅ |
| | | Ti₇O₁₃ | Ti₇O₁₃ | Ti₆O₁₁ (32) | | Ti₄O₇ (35) | |
| Phases | | | | | Ti₆O₁₁ (18) | | |
| | PM | | Ti₆O₁₁ | | Ti₃O₅ (15) | Ti₅O₉ (24) | Ti₄O₇ |
| | | | | | Ti₄O₇ (11) | | |
| | ~ | | Ti₉O₁₇ | Ti₄O₇ | | | |
| | | | | TiO₂ | | | |
| Re-1 (Ω.cm) | | | | 11.10⁻³ | 9.10⁻³ | 4.10⁻² | |
| Re-2 (Ω.cm) | | | | | 3.10⁻³ | | |
| Re-3 (Ω.cm) | | | | | 4.10⁻³ | | |

Dans le tableau 1 ci-dessus, on a reporté entre parenthèses les pourcentages poids respectifs des phases principales et le cas échéant minoritaires dans les grains, tels que mesurés à partir du diffractogramme de rayons X et analyse Rietveld des poudres selon les exemples 3, 4 et 5.

L'analyse des phases cristallines par diffraction des rayons X et analyse de Rietveld sur la poudre des grains de l'exemple B montre qu'ils sont constitués des phases Ti₄O₇ (25% du poids total des grains), Ti₅O₉ (30% poids), Ti₆O₁₁ (20% poids) et Ti₃O₅ (25% poids). La formule générale des grains, obtenue par la mesure de la prise de masse décrite précédemment, est TiO_{1,79} pour l'échantillon comparatif B, comme pour l'exemple 4. On peut voir cependant par comparaison avec les données reportées dans le tableau 1 que les grains obtenus selon l'exemple 4 selon l'invention et ceux obtenus selon l'exemple B comparatifs présentent des pourcentages relatifs des phases de Magnéli très différentes, bien que leur formulation générale TiO_{1,79} soit identique.

Une formule générale TiO_{1,82} est également déterminée pour l'échantillon A, par la mesure de la prise de masse décrite précédemment. Cette formulation apparaît cette fois identique à celle de l'exemple 3 selon l'invention. On mesure également une résistivité électrique comparable entre l'échantillon A et l'échantillon selon l'exemple 3 selon l'invention.

Dans le tableau 2 ci-dessous on a reporté les résultats aux tests de résistance à la corrosion de ces deux échantillons selon le protocole précédemment exposé:

**Tableau 2**

| Ti passé en solution (mg/l) | Exemple 3 | Exemple A |
|---|---|---|
| H₃PO₄ / 72 heures | 4,5 | 6,2 |
| H₃PO₄ / 144 heures | 10,0 | 15,0 |
| H₃PO₄ / 216 heures | 13,0 | 49,0 |
| HCl / 72 heures | 31,0 | 59,0 |
| HCl / 144 heures | 38,0 | 62,0 |
| H₂SO₄ / 72 heures | 4,3 | 25,0 |
| H₂SO₄ / 144 heures | 6,2 | 39,0 |

L'analyse des données reportées dans le tableau 2 montre la supériorité des produits/matériaux obtenus à partir des grains selon l'invention : pour une composition similaire (mais une répartition des phases de Magnéli très différente), on observe que le matériau selon l'invention présente une bien meilleure résistance à la corrosion.

Les résultats améliorés obtenus pour les grains fondus vis-à-vis de la corrosion en présence d'H₃PO₄ permettent d'envisager une utilisation d'un matériau obtenu selon l'invention comme électrode dans les réactions d'électrolyse pour lesquelles l'électrolyte est H₃PO₄, par exemple l'électrolyse de Co(II) pour obtenir Co(III) ou dans la purification de H₃PO₄ par électrolyse dans H₃PO₄.

Les résultats améliorés obtenus pour les grains fondus vis-à-vis de la corrosion en présence d'HCl permettent d'envisager une utilisation d'un matériau obtenu selon l'invention entant qu'électrode pour la production de chlore, à partir d'acide chlorhydrique concentré.

Les résultats améliorés obtenus pour les grains fondus vis-à-vis de la corrosion en présence d'H₂SO₄ permettent d'envisager une utilisation d'un matériau obtenu selon l'invention dans les batteries au plomb pour lesquelles l'électrolyte est H₂SO₄.

Selon un exemple 7 selon l'invention, un échantillon est préparé à partir d'un mélange de matières premières constituées d'une poudre de coke et d'une poudre d'oxyde de titane sous forme anatase et comportant plus de 98% de TiO₂. La poudre de coke représente 10,4% poids du mélange initial de matières premières.

L'échantillon selon l'exemple 7 est obtenu, comme pour les exemples 1 à 6 précédents, par fusion du mélange, selon les mêmes techniques (fusion par four à arcs électriques, sous air puis coulée en lingots puis broyage).

Une formule générale TiO_{1,79} est déterminée pour l'échantillon selon ce nouvel exemple, par la mesure de la prise de masse décrite précédemment. Cette formule est identique à celle de l'échantillon selon l'exemple 4. Les pourcentages poids des phases principales et minoritaires dans les grains apparaissent également comparables à ceux décrits précédemment dans le tableau 1 pour l'exemple 4. Comme pour l'exemple 4, le poids de la phase Ti₄O₇ dans l'échantillon selon l'exemple 7 apparaît en particulier très inférieur à 30% du poids total des grains.

L'échantillon selon l'exemple 7 est mis en forme pour en mesurer la résistivité électrique Re-3 décrite précédemment. La mesure montre une résistivité égale à 5.10⁻⁴ Ω.cm, très inférieure à celle de l'échantillon selon l'exemple 4

L'analyse chimique des impuretés des grains fondus obtenus selon les exemples 4 et 7 est reportée dans le tableau 3 qui suit :

**Tableau 3**

| | TiO_{X} | SiO₂ | Al₂O₃ | Fe₂O₃ | Nb₂O₅ | ZrO₂ | Cr₂O₃ |
|---|---|---|---|---|---|---|---|
| Exemple 4 (%poids) | reste | 1,25 | 0,35 | 0,8 | 0,4 | 0,7 | 0,2 |
| Exemple 7 (%poids) | reste | 0,8 | 0,2 | 0,2 | 0,2 | 0,3 | <0,1 |

Le tableau illustre l'influence inattendue des impuretés présentes dans les grains fondus selon l'invention et notamment de silicium ou de zirconium, la résistivité électrique mesurée selon l'exemple 7 reportée précédemment (dans lequel le taux d'impuretés est inférieur) étant beaucoup plus faible que celle mesurée sur l'échantillon selon l'exemple 4.

Dans les exemples et la description qui précèdent, l'invention a été surtout décrite en relation avec les avantages qu'elle procure par rapport à une utilisation dans le domaine des électrodes.
Cependant, il est bien évident que l'invention concerne également l'utilisation des grains de l'invention dans d'autres applications, en particulier toutes celles où une bonne conductivité électrique ainsi qu'une bonne résistance à la corrosion sont nécessaires. Selon l'application, on pourra notamment adapter la taille des grains fondus selon l'invention, en particulier en choisissant un mode de broyage adapté.
Selon un mode possible, il est également possible d'utiliser les grains fondus selon l'invention comme charge dans des polymères, notamment dans un procédé de fabrication de batteries.

## Revendications

1. Grains fondus constitués essentiellement de phases de sous-oxydes de titane répondant à la formulation TiₙO₂ₙ₋₁, dans lesquels lesdites phases sont principalement Ti₅O₉ ou Ti₆O₁₁ ou un mélange de ces deux phases, lesdites phases Ti₅O₉ et/ou Ti₆O₁₁ représentant, au total, plus de 60% du poids des grains, lesdits grains comprenant en outre moins de 30% en poids de Ti₄O₇.

2. Grains fondus selon l'une des revendications précédentes dans lesquels les phases Ti₅O₉ et/ou Ti₆O₁₁ représentent, au total, plus de 70% du poids des grains.

3. Grains fondus selon l'une des revendications précédentes comprenant moins de 25% en poids de Ti₄O₇.

4. Grains fondus selon l'une des revendications précédentes, comprenant plus de 90% en poids, au total, de sous-oxyde(s) de titane répondant à la formulation générique TiₙO₂ₙ₋₁, n étant un nombre entier supérieur à 3.

5. Grains fondus selon la revendication précédente, dans lesquels n est compris entre 4 et 9, bornes incluses et dans lesquels lesdites phases TiₙO₂ₙ₋₁ représentent, au total, plus de 90% du poids des grains.

6. Grains fondus selon l'une des revendications précédentes, répondant essentiellement à une formulation globale moyenne TiOₓ, dans laquelle x est compris entre 1,95 et 1,50, et de préférence est compris entre 1,75 et 1,85.

7. Produit ou matériau céramique, obtenu par frittage des grains selon l'une des revendications précédentes, notamment à une température comprise entre 1200°C et 1800°C.

8. Produit comprenant un revêtement obtenu par projection des grains selon l'une des revendications 1 à 6.

9. Procédé de fabrication des grains constitués essentiellement de sous-oxyde(s) de titane selon l'une des revendications 1 à 6, ledit procédé comprenant les étapes suivantes :
a) la fusion dans des conditions réductrices d'un mélange initial comprenant des particules de dioxyde de titane, à une température supérieure à 1500°C,
b) le refroidissement du mélange fondu jusqu'à sa solidification,
c) le broyage de la masse solidifiée pour l'obtention de grains fondus du ou des sous-oxydes de titane.

10. Procédé de fabrication selon la revendication 9, dans lequel le mélange initial comprend du dioxyde de titane et du coke, utilisé comme agent réducteur.

11. Procédé de fabrication selon la revendication 10, dans lequel le mélange initial comprend entre 1 et 25% poids de coke, rapporté au poids total du mélange.

12. Procédé de fabrication selon l'une des revendications 10 ou 11, dans lequel la fusion est réalisée sous air.

13. Procédé de fabrication selon l'une des revendications 9 à 12, dans lequel le dioxyde de titane représente plus de 90%, et de préférence la totalité, de la masse minérale totale présente dans le mélange initial.

## Patentansprüche

1. Geschmolzene Körner, die im Wesentlichen aus Titan-Suboxid-Phasen, welche der Formulierung TiₙO₂ₙ₋₁ entsprechen, bestehen, bei denen die Phasen hauptsächlich Ti₅O₉ oder Ti₆O₁₁ oder eine Mischung aus diesen beiden Phasen sind, wobei die Phasen Ti₅O₉ und/oder Ti₆O₁₁ im Ganzen mehr als 60 % des Gewichts der v Körner ausmachen, wobei die Körner ferner weniger als 30 Gew.-% Ti₄O₇ umfassen.

2. Geschmolzene Körner nach einem der vorhergehenden Ansprüche, bei denen die Phasen Ti₅O₉ und/oder Ti₆O₁₁ im Ganzen mehr als 70 % des Gewichts der Körner ausmachen.

3. Geschmolzene Körner nach einem der vorhergehenden Ansprüche, die weniger als 25 Gew.-% Ti₄O₇ umfassen.

4. Geschmolzene Körner nach einem der vorhergehenden Ansprüche, die insgesamt mehr als 90 Gew.-% Titan-Suboxid(e), das (die) der allgemeinen Formulierung TiₙO₂ₙ₋₁ entspricht (entsprechen), wobei n eine ganze Zahl größer als 3 ist, umfassen.

5. Geschmolzene Körner nach dem vorhergehenden Anspruch, bei denen n im Bereich zwischen 4 und einschließlich 9 liegt und bei denen die Phasen TiₙO₂ₙ₋₁ im Ganzen mehr als 90 % des Gewichts der Körner ausmachen.

6. Geschmolzene Körner nach einem der vorhergehenden Ansprüche, die im Wesentlichen einer durchschnittlichen allgemeinen Formulierung TiOₓ entsprechen, bei der x im Bereich zwischen 1,95 und 1,50 und vorzugsweise im Bereich zwischen 1,75 und 1,85 liegt.

7. Keramikprodukt oder -material, das durch Sintern der Körner nach einem der vorhergehenden Ansprüche, insbesondere bei einer Temperatur im Bereich zwischen 1200 °C und 1800 °C erhalten wird.

8. Produkt, das eine durch Aufspritzen der Körner nach einem der Ansprüche 1 bis 6 erhaltene Beschichtung umfasst.

9. Verfahren zur Herstellung der im Wesentlichen aus Titan-Suboxid(en) bestehenden Körner nach einem der Ansprüche 1 bis 6, wobei das Verfahren die folgenden Schritte umfasst:
a) das Schmelzen, unter reduzierenden Bedingungen, einer Ausgangsmischung, die Partikel aus Titandioxid umfasst, bei einer Temperatur von über 1500 °C,
b) das Abkühlen der geschmolzenen Mischung bis zu deren Erstarren,
c) das Zerkleinern der erstarrten Masse für den Erhalt von geschmolzenen Körnern aus dem oder den Titan-Suboxid(en).

10. Herstellungsverfahren nach Anspruch 9, bei dem die Ausgangsmischung Titandioxid und Koks, der als Reduktionsmittel verwendet wird, umfasst.

11. Herstellungsverfahren nach Anspruch 10, bei dem die Ausgangsmischung zwischen 1 und 25 Gew.-% Koks, bezogen auf das Gesamtgewicht der Mischung, umfasst.

12. Herstellungsverfahren nach einem der Ansprüche 10 oder 11, bei dem das Schmelzen unter Luft vollzogen wird.

13. Herstellungsverfahren nach einem der Ansprüche 9 bis 12, bei dem das Titandioxid mehr als 90 % und vorzugsweise die Gesamtheit der in der Ausgangsmischung vorhandenen mineralischen Gesamtmasse ausmacht.

## Claims

1. Molten grains consisting essentially of phases of titanium suboxides corresponding to the formulation TiₙO₂ₙ₋₁, in which said phases are principally Ti₅O₉ or Ti₆O₁₁ or a mixture of these two phases, said Ti₅O₉ and/or Ti₆O₁₁ phases representing, in total, more than 60% of the weight of the grains, said grains also comprising less than 30% by weight of Ti₄O₇.

2. The molten grains as claimed one of the preceding claims, wherein the Ti₅O₉ and/or Ti₆O₁₁ phases represent, in total, more than 70% of the weight of the grains.

3. The molten grains as claimed in either of the preceding claims, comprising less than 25% by weight of Ti₄O₇.

4. The molten grains as claimed in one of the preceding claims, comprising more than 90% by weight, in total, of titanium suboxide(s) corresponding to the generic formulation TiₙO₂ₙ₋₁, n being an integer greater than 3.

5. The molten grains as claimed in the preceding claim, wherein n is between 4 and 9, limits included, and wherein said TiₙO₂ₙ₋₁ phases represent, in total, more than 90% of the weight of the grains.

6. The molten grains as claimed in one of the preceding claims, essentially corresponding to an average overall formulation TiOₓ, in which x is between 1.95 and 1.50, and preferably is between 1.75 and 1.85.

7. A ceramic product or material, obtained by sintering the grains as claimed in one of the preceding claims, in particular at a temperature of between 1200°C and 1800°C.

8. A product comprising a coating obtained by projection of the grains as claimed in one of claims 1 to 6.

9. A process for producing the grains consisting essentially of titanium suboxide(s) as claimed in one of claims 1 to 6, said process comprising the following steps:
a) melting, under reducing conditions, an initial mixture comprising titanium dioxide particles, at a temperature greater than 1500°C,
b) cooling the molten mixture until it has solidified,
c) grinding the solidified mass in order to obtain molten grains of the titanium suboxide(s).

10. The production process as claimed in claim 9, wherein the initial mixture comprises titanium dioxide and coke, used as a reducing agent.

11. The production process as claimed in claim 10, wherein the initial mixture comprises between 1% and 25% by weight of coke, relative to the total weight of the mixture.

12. The production process as claimed in either of claims 10 and 11, wherein the melting is carried out under air.

13. The production process as claimed in one of claims 9 to 12, wherein the titanium dioxide represents more than 90%, and preferably all, of the total inorganic mass present in the initial mixture.
